# FASCICULE DE BREVET EUROPEEN

(11) **EP 3 532 331 B1**
(45) Date de publication et mention de la délivrance du brevet: **21.04.2021**
(21) Numéro de dépôt: 17794288.5
(22) Date de dépôt: 24.10.2017
(51) Int. Cl.: B60K 25/02, B60K 25/06, B60K 17/10, B60K 7/00, B62D 59/04, B60P 1/16

(54) **SYSTÈME D'ASSISTANCE D'ENTRAÎNEMENT D'UNE REMORQUE À PARTIR D'UN CIRCUIT HYDRAULIQUE OUVERT DE BENNAGE**
HILFSANTRIEBSSYSTEM EINES ANHÄNGERS, AUSGEHEND VON EINEM OFFENEN HYDRAULIKKREISLAUF EINES KIPPMECHANISMUS
AUXILIARY DRIVE SYSTEM OF A TRAILER, STARTING FROM AN OPEN HYDRAULIC CIRCUIT OF A TILTING MECHANISM

(30) Priorité: 25.10.2016 FR 1660329
(43) Date de publication de la demande: 04.09.2019
(73) Titulaire: Poclain Hydraulics Industrie, 60410 Verberie (FR)
(72) Inventeur: ROGER, Fabien, 75019 Paris (FR); MAGNIEN, Cédric, 60410 Verberie (FR); DEPIERRE, Gery, 60410 Verberie (FR); DEVRED, David, 60410 Verberie (FR); TAXIL, Loris, 60410 Verberie (FR); ERZNOZNIK, Matej, 60410 Verberie (FR)
(74) Mandataire: Regimbeau
(86) Numéro de dépôt international: PCT/EP2017/077200
(87) Numéro de publication internationale: WO 2018/077899

(56) Documents cités:
- WO-A1-2018/050468
- DE-U- 1 921 848
- FR-A5- 2 035 214
- FR-A5- 2 142 300
- US-A1- 2010 018 728

## Description

La présente invention concerne le domaine des circuits d'assistance dans l'entraînement de véhicules.

Plus précisément, la présente invention concerne l'assistance d'entraînement de remorques.

On a déjà proposé différents systèmes destinés à assurer une assistance à l'entraînement de remorques.

On trouvera des exemples de systèmes connus dans les documents FR 2379394, EP 0399932, EP 0993982, FR 2935128 et WO2012/123056.

Un certain nombre de ces dispositifs connus donne globalement satisfaction.

Cependant, la plupart de ces dispositifs sont complexes et onéreux.

On connaît aussi, du document DE 1921848 U, un système hydraulique installé sur un véhicule tracteur et prévu pour permettre l'alimentation d'un vérin placé sur une remorque, à des fins de bennage.

Par ailleurs, bien que la structure générale de circuits d'assistance à l'entrainement comprenant des moteurs hydrauliques couplés mécaniquement à des essieux de roues, soit connue depuis fort longtemps comme le démontre le document FR 2379394 précité déposé en 1977, soit il y a près de 40 ans, les systèmes proposés pour l'assistance à l'entraînement de remorques n'ont pas véritablement évolué ces dernières années.

En particulier, à la connaissance du déposant, aucun système n'a jusqu'ici été proposé pour permettre de réaliser une assistance à l'entraînement efficace d'une remorque à l'aide d'un circuit d'alimentation en circuit ouvert placé sur un véhicule tracteur et destiné à l'alimentation d'un vérin, en particulier d'un vérin destiné à une opération de bennage. Le circuit ouvert comprend un réservoir de fluide hydraulique sans pression, une machine hydraulique formant pompe, un circuit pouvant comporter des récepteurs hydrauliques, des lignes hydrauliques, et une ligne de retour vers le réservoir.

Le déposant constate donc un manque flagrant dans l'état de la technique.

La présente invention a en conséquence pour objectif de perfectionner l'état de la technique.

Ce but est atteint selon l'invention grâce à un système hydraulique selon la revendication 1, comprenant une pompe hydraulique installée sur un véhicule tracteur, un tuyau hydraulique relié à la sortie de la pompe, un distributeur de commande placé sur le tuyau, et un connecteur placé à la sortie du tuyau et adapté pour être relié à une prise complémentaire prévue sur une remorque pour permettre l'alimentation d'un vérin placé sur la remorque, par exemple à des fins de bennage, caractérisé par le fait qu'il comprend un sélecteur de circuit adapté pour relier ladite prise sélectivement soit vers un vérin soit vers un conduit d'alimentation d'un circuit d'assistance d'entraînement, et un conduit de retour du circuit d'assistance adapté pour être relié à un réservoir placé sur le véhicule tracteur.

L'homme de l'art comprendra que la simple adjonction d'un sélecteur et d'un conduit de retour, telle que préconisée dans le cadre de la présente invention, permet de totalement transformer les capacités de systèmes existant depuis de nombreuses années, en offrant une capacité d'assistance à l'entrainement jusqu'ici impossible.

L'invention concerne également un procédé de réalisation d'un circuit d'assistance d'entraînement d'une remorque selon la revendication 13 et un véhicule selon la revendication 15.

D'autres caractéristiques, buts et avantages de la présente invention apparaîtront à la lecture de la description détaillée qui va suivre et en regard des dessins annexés donnés à titre d'exemples non limitatifs et sur lesquels :
- la figure 1 représente une vue schématique d'une structure connue de l'état de la technique d'un circuit hydraulique conçu pour l'alimentation d'un vérin de bennage,
- la figure 2 représente schématiquement un circuit conforme à la présente invention permettant de compléter le circuit hydraulique connu pour une opération de bennage afin d'opérer une assistance à l'entraînement d'une remorque et
- les figures 3, 4, 5, 6 et 7 représentent diverses variantes de réalisation de moyens particuliers susceptibles d'être intégrés dans le cadre de la présente invention pour assurer la sécurité d'un circuit commun à une première fonction d'assistance et une deuxième fonction, par exemple de bennage.

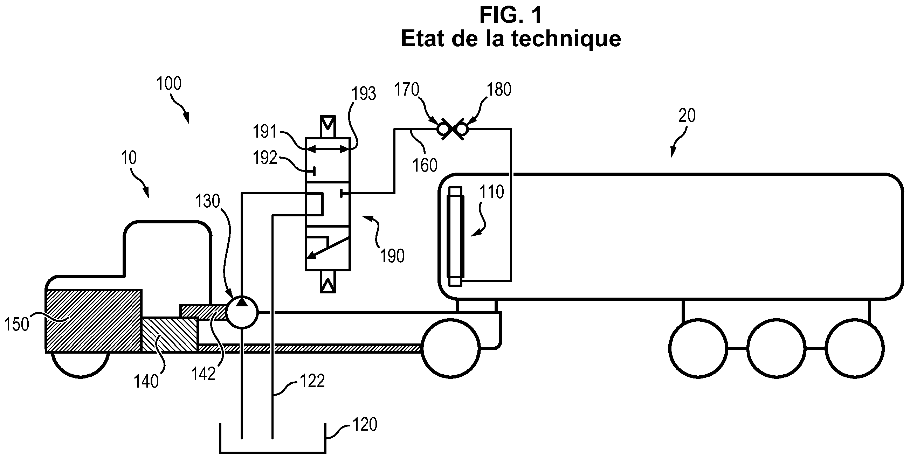

On a représenté schématiquement sur la figure 1 annexée, un véhicule tracteur 10 et une remorque 20 adaptée pour être fixée sur l'arrière du tracteur et être tractée par celui-ci et un circuit hydraulique 100 placé essentiellement sur le véhicule tracteur 10 et adapté pour assurer l'entraînement sélectif d'un vérin 110 à des fins de bennage de la remorque 20.

Plus précisément encore, on aperçoit sur la figure 1 annexée un réservoir 120, une pompe hydraulique 130 dont l'arbre est relié à une sortie ou prise de force 142 associée directement ou indirectement à un moteur principal, tel qu'un moteur thermique 150. Cette prise de force peut également être entrainée par l'intermédiaire d'une boîte de vitesse 140.

La pompe 130 lorsqu'elle est entraînée par la prise de force 142 est adaptée pour prélever de l'huile dans le réservoir 120 et diriger celle-ci vers le vérin de bennage 110.

A cette fin, la sortie de la pompe 130 est reliée à un tuyau hydraulique de liaison 160 lui-même relié à une connexion 170 placée à la sortie du tuyau 160 et adapté pour être relié par l'intermédiaire d'une prise ou connexion complémentaire 180 prévue sur la remorque 20, au vérin de bennage 110.

Un distributeur de commande 190 peut être placé sur le conduit 160 comme illustré sur la figure 1. Selon la configuration donnée sur la figure 1, le distributeur 190 est de type trois voies, trois positions. Les deux entrées 191, 192 du distributeur 190 sont reliées respectivement à la sortie de la pompe 130 et à un conduit de retour 122 communiquant avec le réservoir 120. La sortie 193 du distributeur 190 est reliée au tuyau 160 communiquant avec le connecteur 170.

En position de repos, les deux entrées 191 et 192 sont reliées entre elles et la sortie 160 est isolée. La sortie de la pompe 130 communique donc en boucle avec le réservoir 120.

En position de travail, l'entrée 191 est reliée à la sortie 193 et la pompe 130 alimente le vérin 110 par l'intermédiaire du distributeur 190 et de la liaison 170, 180, pour assurer une opération de bennage.

En position de libération ou décharge, la première entrée 191 et la sortie 193 sont reliées à la deuxième entrée 192 pour retourner l'huile au réservoir 120. Le vérin 110 est alors rétracté.

Un tel circuit connu destiné à l'alimentation d'un vérin de bennage 110 comme illustré sur la figure 1, ne permet pas d'assurer une assistance à l'entraînement de la remorque 20.

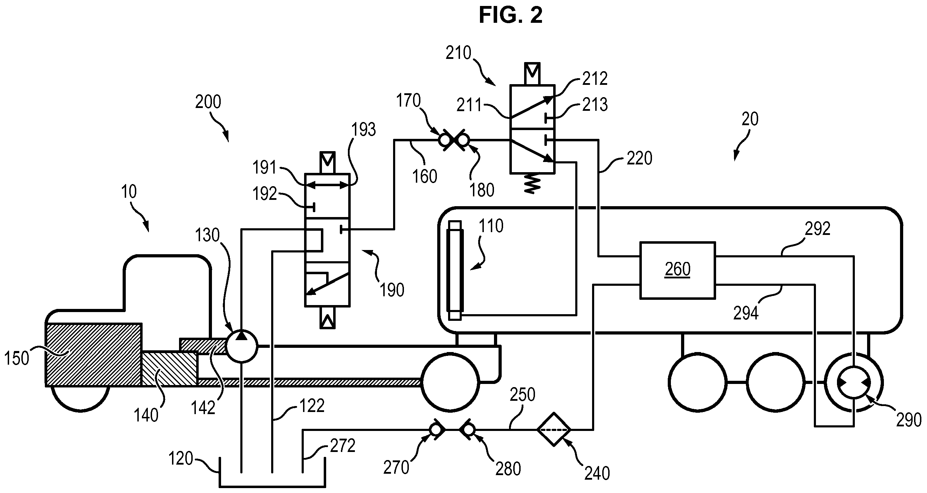

Comme illustré sur la figure 2 annexée, selon l'invention il est proposé de réaliser un nouveau circuit hydraulique 200 en ajoutant au circuit hydraulique connu tel qu'illustré sur la figure 1, d'une part, un sélecteur 210 de circuit et d'autre part, un conduit de retour 250.

Le sélecteur 210 est adapté pour relier la prise 180 connectée à la sortie de la pompe 130 sélectivement, soit vers le vérin 110, soit vers un conduit 220 d'alimentation du circuit d'assistance d'entraînement.

Le conduit de retour 250 du circuit d'assistance est adapté pour être relié au réservoir 120 placé sur le véhicule tracteur.

Pour cela, le conduit 250 est relié à une connexion 280 comparable à la connexion 180. La connexion 280 est destinée à être reliée à un connecteur 270 similaire au connecteur 170, débouchant lui-même sur un conduit 272 qui aboutit dans le réservoir 120.

Le sélecteur 210 est typiquement du type trois voies, deux positions. L'entrée 211 du sélecteur est reliée à la connexion 180. Les deux sorties 212, 213 du sélecteur 210 sont reliées respectivement au conduit d'alimentation 220 du circuit d'assistance d'entraînement et à l'entrée du vérin de bennage 110.

Dans une première position du sélecteur, l'entrée 211 est reliée à la sortie 212. Dans cette position, le circuit hydraulique alimente des moteurs 290 associés à des roues de la remorque.

Il est prévu au moins un moteur 290 sur les roues respectivement droite et gauche d'un même essieu.

Les différents moteurs 290 associés à un essieu commun sont montés hydrauliquement en parallèle.

Dans le cadre de l'invention, il peut être prévu des moteurs 290 sur plusieurs essieux.

D'une manière équivalente, il est également possible de prévoir un moteur unique entrainant un essieu. Cet essieu comportant ou non un engrenage différentiel.

Dans la seconde position du sélecteur 210, l'entrée 211 est reliée à la deuxième sortie 213. Dans cette position, le circuit hydraulique alimente de façon connue en soi, le vérin 110 pour opérer une opération de bennage.

Les moteurs 290 équipant certaines des roues de la remorque sont de préférence des moteurs à pistons radiaux. Il est particulièrement avantageux que le moteur 290 soit un moteur à pistons radiaux à came multilobes, et d'une manière préférée un moteur tournant à la vitesse des roues ou de l'arbre d'entrée de l'essieu.

La configuration de tels moteurs à pistons radiaux est bien connue en soi. La société POCLAIN a en particulier proposé différents modèles de tels moteurs à pistons radiaux. La structure et le fonctionnement de tels moteurs à pistons radiaux ne sera donc pas décrit plus détail par la suite.

Sur la figure 2, on a référencé 292 une entrée d'un moteur 290 reliée au conduit 220 par l'intermédiaire d'un circuit de contrôle 260 et on a référencé 294 la sortie du moteur 290 reliée au conduit de retour 250.

Le circuit de contrôle 260 peut comprendre tout équipement connu de l'homme de l'art permettant d'assurer un bon fonctionnement du circuit d'alimentation de la pompe 290, en particulier tout moyen limiteur de pression destiné à protéger le moteur 290.

Sur la figure 2, on a référencé 240 un filtre placé sur le conduit de retour 250 et destiné à filtrer l'huile circulant dans le circuit avant son retour au réservoir 120.

L'interface de commande, ou interface homme-machine mise à disposition du conducteur sur le véhicule tracteur 10 est connue en soi. Elle comprend typiquement deux commandes : d'une part, un interrupteur d'engagement de la prise de force 142 pour assurer l'entraînement de la pompe 130, avec de préférence un voyant de retour d'activation et, d'autre part un levier de bennage montée/descente pour assurer la commande du vérin de bennage 110.

Dans le cadre de l'invention, le circuit actif par défaut est de préférence l'assistance afin d'éliminer le risque de bennage lorsque l'on souhaite l'assistance hydraulique. Ainsi, le distributeur 210 est sollicité au repos en position de liaison de l'entrée 211 connectée à la pompe 130 avec la sortie 212 reliée au conduit d'alimentation du circuit d'assistance d'entraînement 220.

Dans le cadre de l'invention, l'interface mise à disposition du conducteur sur le véhicule comprend en outre un interrupteur de sélection permettant de désactiver l'assistance en commutant le distributeur 210 dans sa deuxième position pour assurer une mise en service du sélecteur de bennage.

Dans le cadre de l'invention, la procédure pour assurer le bennage par alimentation du vérin 110 est essentiellement la suivante :
- sélection de la désactivation du circuit d'assistance d'entraînement en pilotant le sélecteur 210, engagement de la prise de force 142 pour assurer l'entraînement de la pompe 130, et
- contrôle du bennage grâce au levier correspondant.

La procédure pour assurer l'assistance d'entraînement dans le cadre de l'invention est essentiellement la suivante :
- sélection du mode assistance en pilotant le distributeur 210 dans la position appropriée,
- engagement de la prise de force 142 pour assurer l'alimentation de la pompe 130, et
- engagement de l'assistance.

Selon un mode de réalisation particulier, afin de faciliter l'adaptation du circuit hydraulique conforme à l'invention sur des véhicules tracteurs existants, le conduit de retour 272 débouche sur le bouchon de ce réservoir 120. Cette disposition permet d'utiliser simplement un système hydraulique de benne standard, sans modifier le corps du réservoir pour ajouter un piquage hydraulique, puisqu'il suffit de remplacer le bouchon habituel par un bouchon spécial, comportant un piquage hydraulique, et facile à mettre en œuvre. Ce mode de réalisation particulier permet donc de créer des variantes de véhicule avec assistance sans modifier le réservoir d'huile habituel.

Selon une autre disposition de l'invention, la valve d'enclenchement d'assistance 210 peut être commandée via une autre commande détournée de son usage premier habituel, en particulier un interrupteur situé en cabine, par exemple un interrupteur de feu de brouillard. Dans ce cas, lorsque l'on allume les anti-brouillards, l'assistance 210 est enclenchée en même temps, et devient active si on actionne le distributeur 190.

Bien entendu, la présente invention n'est pas limitée aux modes de réalisation particuliers qui viennent d'être décrits mais s'étend à toutes variantes conformes à son esprit.

L'homme de l'art comprendra à la lecture de la description qui précède que l'invention présente de nombreux avantages par rapport à l'état de la technique. Elle permet d'offrir un circuit d'assistance d'entraînement de remorque optimisé sur la base d'un circuit de bennage classique, avec l'adjonction de composants simples, fiables et peu onéreux.

La présente invention permet ainsi de proposer un système d'assistance de remorque compatible avec les systèmes hydrauliques de bennage de remorque connus sans modification importante du système hydraulique.

L'invention permet en outre de travailler en toute sécurité. L'invention permet en effet d'éviter tout risque de bennage lors de l'utilisation de l'assistance grâce au sélecteur 210.

Le système d'assistance décrit dans la présente demande et basé sur le moteur hydraulique 290 peut être placé sur d'autres roues que celles d'une remorque. Il peut en utilisant la pompe 130 d'accessoires hydrauliques en boucle ouverte être associé par exemple à des essieux porteurs d'un camion, notamment un essieu avant directionnel, de multiples essieux directionnels, des essieux relevables, etc ...

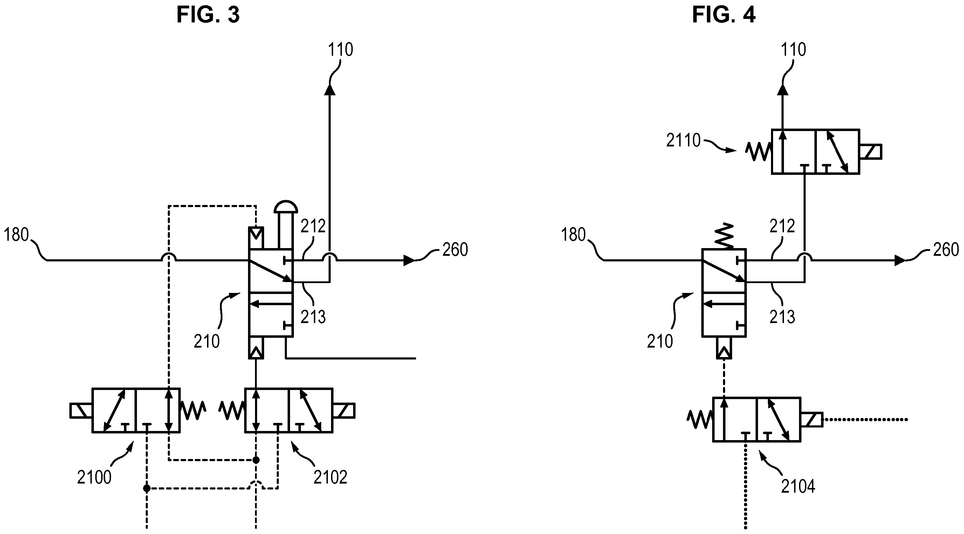

Comme indiqué précédemment les figures 3, 4, 5, 6 et 7 représentent diverses variantes de réalisation de moyens particuliers susceptibles d'être intégrés dans le cadre de la présente invention pour assurer la sécurité d'un circuit commun à une première fonction d'assistance opérée grâce aux moteurs 290 et une deuxième fonction, par exemple de bennage, opérée à l'aide du vérin 110.

Les moyens illustrés sur les figures 3, 4, 5, 6 et 7 ont pour objectif d'éviter qu'un débit d'huile généré par la pompe 130 ne puisse actionner un mauvais composant hydraulique en cas de déficience (par exemple actionner le vérin de benne 110 ou un moteur hydraulique 290, si ceci n'est pas souhaité). Un tel actionnement accidentel peut se produire éventuellement en cas de dépilotage de la valve de sélection 210 précitée, c'est-à-dire en cas de défaillance de ce composant ou de son pilotage. On comprend par exemple que en cas de dépilotage de la valve de sélection 210 conduisant à un actionnement intempestif du vérin 110 de commande de bennage, une montée du vérin 110 de benne crée des risques par rapport à la sécurité, tout particulièrement si cet actionnement intempestif du vérin 110 est réalisé lorsque le véhicule roule avec l'assistance.

Globalement les moyens additionnels conformes à la présente invention, illustrés sur les figures 3, 4, 5, 6 et 7, ont pour objectif de garantir un maintien en position souhaitée des moyens de contrôle de la veine de fluide ou de coupure de la veine de fluide pour éviter une alimentation inopinée d'un mauvais composant, notamment du vérin 110 de commande de bennage.

Selon le premier mode de réalisation illustré sur la figure 3, il est prévu selon l'invention que la valve de sélection 210 qui permet de choisir d'alimenter soit le vérin 110 de benne, soit les moteurs 290 de l'essieu hydraulique, soit non pas une valve monostable comme illustré sur la figure 2, mais une valve bistable.

Une telle valve bistable 210 requiert de façon connue en soi une commande positive, c'est à dire une commande volontaire, pour changer de position dans chaque sens. Elle requiert donc deux commandes. Sur la figure 3 ces deux commandes sont référencées 2100 et 2102. Elles peuvent faire l'objet de nombreux modes de réalisation et ne seront donc pas décrites dans le détail par la suite.

Une telle valve de sélection 210 bistable permet de garantir le maintien en position de son tiroir, même en cas de coupure de sa commande de pilotage, c'est-à-dire permet de maintenir la position de la valve de sélection 210 en cas de perte de sa commande, qu'elle soit hydraulique, pneumatique ou électrique.

Selon l'invention la valve de sélection bistable 210 comporte cependant également une fonction de commande manuelle permettant de piloter manuellement un retour à l'état initial de cette valve 210 et ainsi de garantir l'utilisation de la benne lorsque cela est souhaitée, quelle que soit la configuration du véhicule.

Selon le deuxième mode de réalisation illustré sur la figure 4, une valve de sécurité 2110 est intercalée entre la sortie 213 de la valve de sélection 210 et l'entrée du vérin 110. La valve de sélection 210 peut également être bistable dans ce cas. Cependant dans ce cas la valve de sélection 210 est de préférence monostable comme illustré sur la figure 4 (sa commande est référencée 2104 sur la figure 4).

Plus précisément de préférence dans le cadre de ce deuxième mode de réalisation, la valve de sélection 210 est normalement ouverte vers le bennage, tandis que la valve de sécurité 2110 est une valve de coupure normalement fermée sur le bennage, mais ouverte sur commande, par exemple à l'aide d'un signal électrique provenant de l'unité centrale qui pilote le système.

Là encore cette valve de sécurité 2110 peut comporter également une fonction de commande manuelle permettant de piloter manuellement un retour à l'état initial de cette valve 2110 et ainsi de garantir l'utilisation de la benne lorsque cela est souhaitée, quelle que soit la configuration du véhicule.

Le fait de prévoir que la valve de sélection 210 est normalement ouverte vers le bennage et non pas vers le circuit d'assistance, permet de garantir que en cas de panne, l'assistance ne risque pas d'être engagée de manière intempestive.

De manière alternative on peut prévoir dans le cadre de ce deuxième mode de réalisation, que la valve de sélection 210 est normalement ouverte vers le circuit d'assistance, tandis qu'une valve de sécurité 2110 formée d'une valve de coupure normalement fermée, est intercalée entre la sortie de la valve de sélection 210 dédiée au circuit d'assistance et les moteurs du circuit d'assistance.

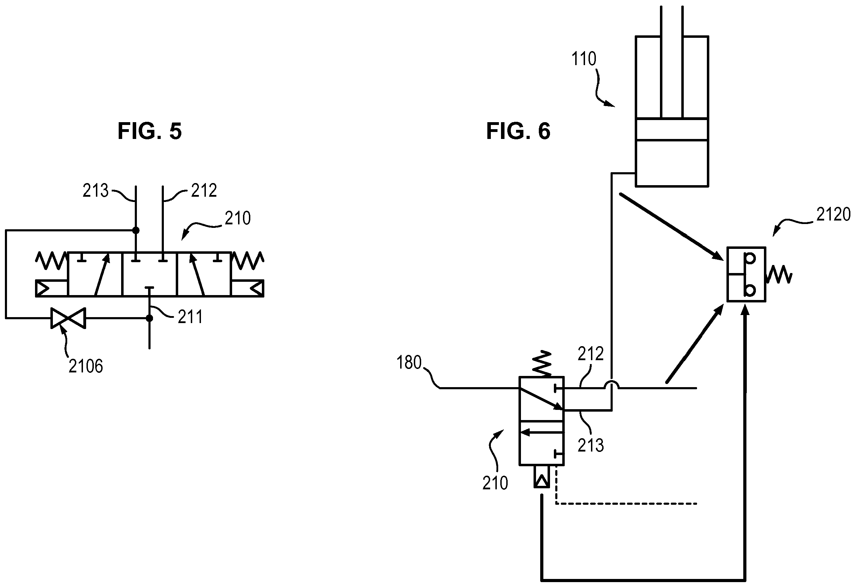

Selon le troisième mode de réalisation illustré sur la figure 5, la valve de sélection 210 est une valve 3 positions à centre fermé. Dans une première position, la valve de sélection 210 relie la sortie de pompe 130 à l'entrée du vérin 110. Dans une deuxième position, la valve de sélection 210 relie la sortie de pompe à l'entrée du circuit d'assistance. Et dans la position intermédiaire, dite « centre fermé », la valve de sélection 210 est fermée, c'est-à-dire que chacune de ses entrée et sorties 211, 212 et 213 est isolée. En cas de coupure de la commande, une telle valve de sélection 210 prend sa position de centre fermé et ferme donc toutes les liaisons en cas de coupure, sans risque de commutation entre la première et la deuxième position ou inversement.

L'utilisation d'une telle valve de sélection 210, 3 positions centre fermé, permet de mettre en sécurité les systèmes, benne et assistance, en cas de problème divers.

La valve de sélection 210 illustrée sur la figure 5 peut comporter également une fonction de commande manuelle permettant par exemple de rendre passant un court-circuit 2016 de son tiroir pour forcer l'alimentation d'un circuit choisi, par exemple du vérin 110 et donc par exemple du bennage.

Selon le quatrième mode de réalisation illustré sur la figure 6, le système comprend au moins un capteur de pression 2120 adapté pour commuter un composant du système lors de la détection d'une déficience, par exemple pour isoler la pompe 130, couper l'alimentation de la pompe 130 ou interrompre le débit de la pompe en pilotant une valve associée à la pompe 130.

Le capteur de pression 2120 peut mesurer la pression en différents points du circuit. Il peut être formé d'un capteur qui mesure précisément la pression ou d'un simple interrupteur sensible à la pression (voir à une absence de pression par exemple sur le circuit d'assistance) ou à une position.

Il peut par exemple mesurer la pression au niveau de la ligne d'alimentation du vérin 110 en assurant l'arrêt de la source de débit, par exemple l'arrêt de la pompe 130, en cas de détection d'une pression non conforme.

Cependant le capteur de pression 2120 peut faire l'objet d'autres implantations. Il peut par exemple mesurer la pression dans la valve de sélection 210. Il peut être formé d'un capteur de contact lié à la position du tiroir de la valve de sélection 210 ou bien d'un capteur de pression HP à l'entrée d'une valve de distributeur située sur le circuit d'assistance, afin de détecter une alimentation inopinée du vérin 110 et donc une montée de benne intempestive ou du circuit d'assistance. Dans ce cas l'unité centrale de commande est par exemple adaptée pour transmettre un signal permettant de court-circuiter ou isoler la pompe 130 pour arrêter la montée de benne et mettre le système en sécurité. D'une manière générale, il s'agit de neutraliser la pompe par rapport au circuit hydraulique considéré, c'est-à-dire de la rendre inactive hydraulquement sur le circuit.

Sur la figure 6 le capteur de pression précité est schématiquement représenté sous la référence 2120 et illustré dans une interaction possible avec la ligne d'alimentation du vérin 210 pour mesurer sa pression d'alimentation, avec la commande de la valve de sélection 210 et en alternative ou complément avec la ligne d'alimentation du circuit d'assistance pour mesurer sa pression d'alimentation.

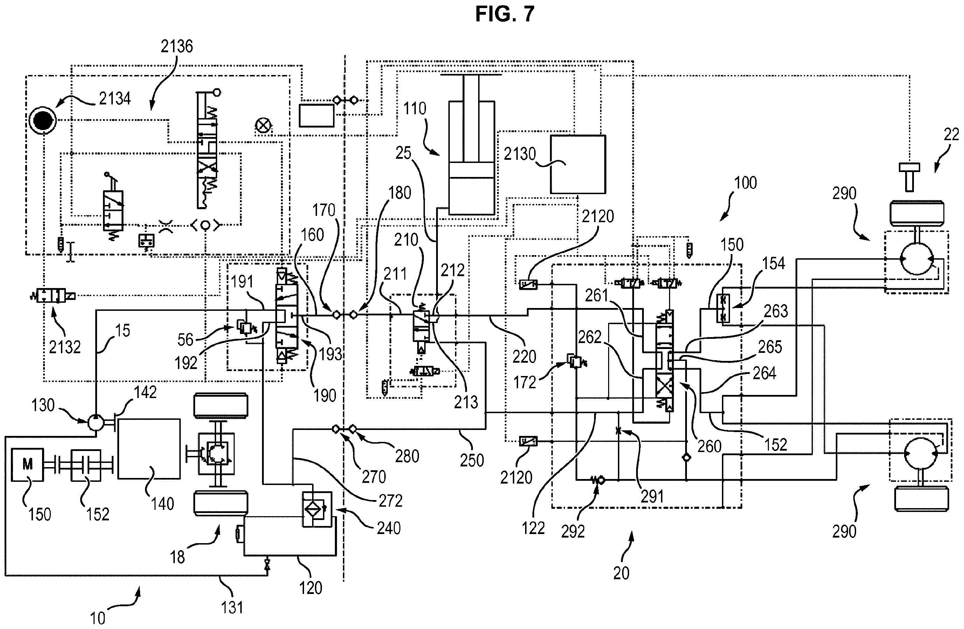

On a représenté sur la figure 7 un mode de réalisation d'un circuit qui comprend un capteur 2120 adapté pour commuter un composant du système, en l'espèce arrêter la pompe 130, lors de la détection d'une déficience.

En l'espèce selon le mode de réalisation illustré sur la figure 7 le capteur 2120 est adapté pour mesurer la pression en entrée du circuit d'assistance 100 et adresser un signal correspondant à une unité centrale 2130 laquelle est adaptée pour piloter une vanne 2132 elle-même adaptée pour assurer la commutation d'un distributeur 190 permettant d'interrompre l'application de la pression de la pompe 130 vers la remorque.

On aperçoit sur la figure 7 :
a. un véhicule tracteur 10 qui porte :
   - un moteur principal 150, par exemple un moteur thermique,
   - un embrayage 152 associé au moteur 150,
   - une boîte de vitesse 140 reliée à la sortie de l'embrayage 152 et intercalée entre l'embrayage 152 et un essieu moteur 18,
   - une prise de force 142 entrainée directement ou indirectement par le moteur principal 150 et placée à cette fin soit sur une sortie du moteur 150, soit en sortie de la boîte de vitesse 140,
   - une machine hydraulique formant pompe 130 entraînée par la prise de force 142,
   - un réservoir 120, un conduit d'aspiration 131 qui relie le réservoir 120 à l'entrée de la pompe 130 et un conduit d'alimentation 15 relié à la sortie de la pompe 130,
   - un distributeur de sélection 190 (distributeur 3 voies, 3 positions ayant une première entrée 191 reliée au conduit d'alimentation 15, une deuxième entrée 192 reliée au réservoir 120 et une sortie 193 reliée au connecteur d'alimentation 170 de sorte que dans une première position du distributeur 190, les deux entrées 191 et 192 sont reliées entre elles, de sorte que le débit de la pompe 130 est redirigé directement vers le réservoir 120 tandis que la sortie 193 est isolée de la pompe, dans une deuxième position, la première entrée 191 est reliée à la sortie 193 et le débit de la pompe 130 peut être utilisé pour alimenter un vérin 110 ou alimenter l'assistance, et dans une troisième position, la deuxième entrée 192 est reliée à la sortie 193 de sorte que le vérin 110 peut être vidangé vers le réservoir 120),
   - un limiteur de pression 56 placé entre les entrées 191 et 192,
   - un connecteur d'alimentation 170,
   - un connecteur de retour 270,
   - un conduit de retour 272 placé entre le connecteur de retour 270 et le réservoir 120,
   - un filtre 240 placé sur le conduit retour 272,
   - la vanne 2132 précitée,
   - un accumulateur pneumatique 2134,
   - un ensemble 2136 de pilotage placé en cabine du tracteur et adapté pour piloter l'unité centrale 2130 et la valve de sélection 210,
b. une remorque 20 qui porte :
   - un connecteur d'alimentation 180 destiné à être raccordé au connecteur 170 et
   - un connecteur de retour 280 destiné à être raccordé au connecteur 270,
   - un vérin 110, par exemple un vérin assurant une fonction de bennage, levage, stabilisation ou autre fonction accessoire,
   - un conduit 25 d'alimentation du vérin 110, relié au connecteur d'alimentation 180, par l'intermédiaire de la valve 210, de sorte que lorsque la pompe 130 est activée et que le distributeur 190 est en deuxième position, le vérin 110 est alimenté par l'intermédiaire des liaisons 15 et 25 et les connecteurs 170, 180, tandis que lorsque le distributeur 190 est commuté en troisième position, le vérin 110 peut se décharger via la ligne 25, et les connecteurs 170, 180, vers le réservoir 120,
   - un distributeur 210 permettant une sélection entre l'alimentation du vérin 110 précité ou le circuit d'assistance 100 (typiquement un distributeur 210 de type trois voies, deux positions, dont une entrée 211 est reliée au connecteur 180, deux sorties 213, 212 sont reliées respectivement au conduit d'alimentation 25 du vérin 110 et à une ligne d'alimentation 120 du circuit d'assistance 100, de sorte que dans une première position, l'entrée 211 est reliée à la sortie 212, le vérin 110 est alors alimenté, tandis que le circuit d'entraînement d'assistance à l'entraînement 100 n'est pas alimenté, dans la seconde position, inversement, l'entrée 211 est reliée à la sortie 213, de sorte que le vérin 110 n'est pas alimenté et au contraire le circuit d'assistance à l'entraînement 100 est alimenté par la ligne d'alimentation et les connecteurs 170, 180,
   - une ligne haute pression 150 et une ligne basse pression 152,
   - deux moteurs 290 reliés en parallèle et associés respectivement aux roues droite et gauche d'un essieu 22, une entrée de chaque moteur 290 étant reliée à la ligne haute pression 150, de préférence par l'intermédiaire d'un répartiteur diviseur de débit 154, tandis que les sorties des moteurs 290 sont reliées en parallèle à la ligne basse pression 152,
   - une ligne retour 122 reliée au connecteur 280,
   - un distributeur 260 (par exemple un distributeur cinq voies, trois positions intercalé entre, d'une part la ligne d'alimentation 220 et la ligne de retour 122 et, d'autre part la ligne haute pression 150 et la ligne basse pression 152, les entrées 261, 262 du distributeur 260 étant reliées respectivement à la ligne d'alimentation 220 et à la ligne de retour 122, une première sortie 263 du distributeur 260 est reliée aux entrées des moteurs 290, plus précisément à l'entrée du diviseur 154, une deuxième sortie 264 du distributeur 260 est reliée aux sorties des moteurs 290, la troisième sortie 265 du distributeur 260 est reliée à la ligne de retour 122 par une conduite 166, de sorte que dans une première position de repos, les deux entrées 261, 262 du distributeur 260 sont reliées entre elles et les trois sorties 263, 264, 265 sont également reliées entre elles, dans cette position, le circuit d'assistance est court-circuité ; Lorsque l'assistance est sélectionnée mais non activée, et donc que l'alimentation du vérin 110 n'est pas sélectionnée, l'huile pompée par la pompe 130 est retournée au réservoir 120 par les lignes de retour 122, 126, les conduits d'alimentation et de retour des moteurs 290 ne sont pas alimentés, et sont reliés au réservoir d'huile sans pression 120, par l'intermédiaire de la sortie 265 et de la conduite 166 qui forme une ligne de vidange des moteurs ; dans une deuxième position, la première entrée 261 est reliée à la sortie 263 et la deuxième entrée 262 est reliée à la deuxième sortie 264, les moteurs 290 sont alors alimentés par la pompe 130 par l'intermédiaire des conduits 220, 122 dans le sens avant correspondant à un premier sens de rotation de moteur, et dans la troisième position du distributeur 260, la première entrée 261 est reliée à la deuxième sortie 264 et la deuxième entrée 262 est reliée à la première sortie 263, les moteurs 290 sont alors entraînés dans le sens de rotation opposé, en marche arrière),. le capteur précité 2120 qui mesure la pression en entrée du circuit d'assistance 100 et communique avec l'unité centrale 2130,
   - un clapet de fuite 292 qui définit la pression dans le carter des moteurs 290, en sortie d'une une restriction 291,
   - un limiteur de pression 172 placé entre la ligne d'alimentation 220 et la ligne de retour 122.

En synthèse les moyens additionnels illustrés sur les figures 3 à 7 sont adaptés pour :
- soit fermer la ligne d'alimentation du vérin de bennage 110 (grâce à la valve de sécurité 2110),
- soit imposer une position repos de la valve de sélection 210 différente de la position d'alimentation du vérin de bennage 110 (centre fermé ou valve bistable ou valve normalement orientée sur assistance)
- soit détecter une variation de pression par des capteurs 2120, représentative de la perte de signal, (par exemple alimentation du vérin 110 lors de l'assistance), et couper l'alimentation hydraulique.

## Revendications

1. Système hydraulique comprenant :
- une pompe hydraulique (130) installée sur un véhicule tracteur (10),
- un tuyau hydraulique (160) relié à la sortie de la pompe (130),
- un distributeur de commande (190) placé sur le tuyau, et
- un connecteur (170) placé à la sortie du tuyau (160) et adapté pour être relié à une prise complémentaire (180) prévue sur une remorque (20) pour permettre l'alimentation d'un vérin (110) placé sur la remorque, par exemple à des fins de bennage,
**caractérisé par le fait qu'**il comprend :
- un sélecteur de circuit (210) adapté pour relier ladite prise (180) sélectivement soit vers un vérin (110) soit vers un conduit (220) d'alimentation d'un circuit d'assistance d'entraînement, et
- un conduit de retour (250) de circuit d'assistance adapté pour être relié à un réservoir (120) placé sur le véhicule tracteur.

2. Système selon la revendication 1, dans lequel le sélecteur (210) est un sélecteur trois voies, deux positions comprenant une entrée (211) adaptée pour être reliée à ladite prise (180) et deux sorties (212, 213) adaptées pour être reliées respectivement au conduit d'alimentation du circuit d'assistance d'entraînement (220) et au vérin (110), l'entrée (211) étant reliée à la première sortie (212) dans une première position du sélecteur (210) et l'entrée (211) étant reliée à la seconde sortie (213) dans la seconde position du sélecteur (210).

3. Système selon l'une des revendications 1 ou 2, dans lequel le sélecteur (210) est placé au repos dans une position de circuit actif d'assistance d'entraînement.

4. Système selon l'une des revendications 1 à 3, dans lequel le conduit de retour (250) débouche dans le bouchon du réservoir (120).

5. Système selon l'une des revendications 1 à 4, qui comprend un distributeur de commande 3 voies 3 positions (190) intercalé entre la pompe hydraulique (130) et le tuyau hydraulique (160) pour permettre de connecter alternativement la sortie de pompe (130) au tuyau hydraulique (160) ou à un réservoir (120) ou de relier le tuyau hydraulique (160) au réservoir (120).

6. Système selon l'une des revendications 1 à 5, dans lequel le sélecteur (210) est piloté par une commande détournée de son usage premier habituel, en particulier un interrupteur situé en cabine.

7. Système selon l'une des revendications 1 à 6, qui comprend des moyens de sécurité adaptés pour assurer qu'un débit d'huile généré par la pompe (130) ne puisse actionner un mauvais composant hydraulique en cas de déficience et garantir un maintien en position souhaitée des moyens de contrôle de la veine de fluide ou de coupure de la veine de fluide pour éviter une alimentation inopinée d'un mauvais composant, notamment d'un vérin (110) de commande de bennage,
les moyens de sécurité étant notamment adaptés pour :
• soit fermer la ligne d'alimentation du vérin (110), par exemple grâce à une valve de sécurité (2110),
• soit imposer une position de repos du sélecteur de circuit (210) différente de la position d'alimentation du vérin (110), par exemple grâce à une valve centre fermé ou une valve bistable ou une valve normalement orientée sur assistance,
• soit détecter une variation de pression par des capteurs (2120), représentative d'une perte de signal, par exemple correspondant à l'alimentation du vérin (110) lors de l'assistance, et couper l'alimentation hydraulique.

8. Système selon la revendication 7, qui comprend au moins un capteur de position ou de pression (2120), notamment un capteur de pression adapté pour mesurer la pression au niveau de la ligne d'alimentation du vérin (110) et/ou du circuit d'assistance (100), adapté pour commuter un composant du système lors de la détection d'une déficience, par exemple pour isoler la pompe (130), couper l'alimentation de la pompe (130) ou interrompre le débit de la pompe en pilotant une valve associée à la pompe (130).

9. Système selon l'une des revendications 7 ou 8, dans lequel le sélecteur de circuit (210) est une valve bistable.

10. Système selon l'une des revendications 7 à 9, dans lequel une valve de sécurité (2110) est intercalée entre une sortie (213) du sélecteur de circuit (210) et l'entrée du circuit associé.

11. Système selon la revendication qui précède, dans lequel le sélecteur de circuit (210) est normalement ouvert vers le circuit associé à la valve de sécurité (2110), tandis que la valve de sécurité (2110) est une valve de coupure normalement fermée, mais ouverte sur commande.

12. Système selon l'une des revendications 7 à 11, dans lequel le sélecteur de circuit (210) est une valve 3 positions à centre fermé.

13. Procédé de réalisation d'un circuit d'assistance d'entraînement d'une remorque à partir d'un ensemble existant comprenant :
- une pompe hydraulique (130) installée sur un véhicule tracteur (10),
- un tuyau hydraulique (160) relié à la sortie de la pompe (130),
et
- une connexion (170) placée à la sortie du tuyau (160) et adaptée pour être reliée à une prise complémentaire (180) prévue sur une remorque (20) pour permettre l'alimentation d'un vérin (110) placé sur la remorque, par exemple à des fins de bennage,
**caractérisé par le fait qu'**il comprend les étapes consistant à placer sur la remorque :
- un sélecteur de circuit (210) adapté pour relier ladite prise (180) sélectivement, soit vers le vérin (110), soit vers un conduit d'alimentation (220) d'un circuit d'assistance d'entraînement, et
- un conduit de retour (250) de circuit d'assistance adapté pour être relié à un réservoir (120) placé sur le véhicule tracteur.

14. Procédé selon la revendication 13, qui comprend les étapes, pour une procédure de bennage, consistant à:
- désactiver l'assistance par commande du sélecteur,
- entraîner la pompe (130) et contrôler le bennage avec une commande correspondante, et
pour une procédure d'assistance, à
- sélectionner le mode assistance par commande du sélecteur (210), puis
- mettre en service la pompe (130).

15. Véhicule qui comprend un système hydraulique conforme à l'une des revendications 1 à 12.

## Patentansprüche

1. Hydrauliksystem, umfassend:
- eine Hydraulikpumpe (130), die auf einem Zugfahrzeug (10) eingebaut ist,
- einen Hydraulikschlauch (160), der am Ausgang der Pumpe (130) angeschlossen ist,
- einen Steuerverteiler (190), der auf dem Schlauch angeordnet ist, und
- einen Verbinder (170), der am Ausgang des Schlauchs (160) angeordnet und geeignet ist, um mit einem komplementären Stecker (180) verbunden zu sein, der auf einem Anhänger (20) vorgesehen ist, um die Versorgung eines Zylinders (110) zu ermöglichen, der auf dem Anhänger, zum Beispiel für eine Anhängerladung, angeordnet ist
**gekennzeichnet durch** die Tatsache, dass es umfasst:
- einen Schaltungswählhebel (210), der zum Verbinden des genannten Steckers (180) selektiv entweder zu einem Zylinder (110) oder zu einer Versorgungsleitung (220) einer Antriebs-Unterstützungsschaltung geeignet ist, und
- eine Unterstützungsschaltungs-Rückleitung (250), die geeignet ist, um mit einem Tank (120) verbunden zu sein, der auf dem Zugfahrzeug angeordnet ist.

2. System gemäß Anspruch 1, bei dem der Wählhebel (210) ein Dreiwege-Wählhebel ist, wobei zwei Positionen einen Eingang (211), der geeignet ist, um mit dem genannten Stecker (180) verbunden zu sein, und zwei Ausgänge (212, 213), die geeignet sind, um jeweils mit der Versorgungsleitung der Antriebs-Unterstützungsleitung (220) und dem Zylinder (110) verbunden zu sein, umfassen, wobei der Eingang (211) mit dem ersten Ausgang (212) in einer ersten Position des Wählhebels (210) verbunden ist und der Eingang (211) mit dem zweiten Ausgang (213) in der zweiten Position des Wählhebels (210) verbunden ist.

3. System gemäß einem der Ansprüche 1 oder 2, bei dem der Wählhebel (210) in einer Position der aktiven Antriebs-Unterstützungsschaltung in Ruheposition angeordnet ist.

4. System gemäß einem der Ansprüche 1 bis 3, bei dem die Rückleitung (250) in den Verschluss des Tanks (120) mündet.

5. System gemäß einem der Ansprüche 1 bis 4, das einen Dreiwege-Steuerverteiler mit 3 Positionen (190) umfasst, der zwischen der Hydraulikpumpe (130) und dem Hydraulikschlauch (160) zwischengeschaltet ist, um das abwechselnde Anschließen des Pumpenausgangs (130) im Hydraulikschlauch (160) und an einem Tank (120) oder das Verbinden des Hydraulikschlauchs (160) am Tank (120) zu ermöglichen.

6. System gemäß einem der Ansprüche 1 bis 5, bei der Wählhebel (210) durch eine Steuerung gesteuert ist, die von ihrer ersten üblichen Verwendung abgeleitet ist, insbesondere einem in der Kabine angeordneten Schalter.

7. System gemäß einem der Ansprüche 1 bis 6, das Sicherheitsmittel umfasst, die zum Gewährleisten geeignet sind, dass ein von der Pumpe (130) erzeugter Öldurchsatz einen falschen hydraulischen Bestandteil bei einem Mangel nicht betätigen und ein Halten der Kontrollmittel der Ader des Fluids in der gewünschten Position oder ein Abschalten der Ader des Fluids gewährleisten kann, um eine unerwartete Versorgung eines falschen Bestandteils, insbesondere von einem Zylinder (110) der Anhängerladungssteuerung, zu verhindern,
wobei die Sicherheitsmittel insbesondere geeignet sind zum:
• entweder Schließen der Versorgungsleitung des Zylinders (100), zum Beispiel dank eines Sicherheitsventils (2110),
• oder zum Erzwingen einer Ruhestellung des Schaltungswählhebels (210), die von der Versorgungsposition des Zylinders (110) unterschiedlich ist, zum Beispiel dank eines geschlossenen zentralen Ventils oder eines bistabilen Ventils oder eines normalerweise zur Unterstützung ausgerichteten Ventils,
• oder zum Detektieren einer Druckvariation durch Sensoren (2120), die einen Signalverlust darstellen, der zum Beispiel der Versorgung des Ventils (110) bei der Unterstützung entspricht, und zum Abschalten der hydraulischen Versorgung.

8. System gemäß Anspruch 7, das wenigstens einen Positions- oder Drucksensor (2120), insbesondere einen Drucksensor, der zum Messen des Drucks an der Versorgungsleitung des Zylinders (110) und / oder der Unterstützungsschaltung (100) angeordnet ist, der geeignet ist, um einen Bestandteil des Systems bei der Detektion eines Mangels zu schalten, um zum Beispiel die Pumpe (130) zu isolieren, die Versorgung der Pumpe (130) abzuschalten oder den Durchsatz der Pumpe durch Steuern eines der Pumpe (130) zugeordneten Ventils zu unterbrechen, umfasst.

9. System gemäß einem der Ansprüche 7 oder 8, bei dem der Schaltungswählhebel (210) ein bistabiles Ventil ist.

10. System gemäß einem der Ansprüche 7 bis 9, bei dem ein Sicherheitsventil (2110) zwischen einem Ausgang (213) des Schaltungswählhebels (210) und dem Eingang der zugeordneten Schaltung zwischengeschaltet ist.

11. System gemäß dem voranstehenden Anspruch, bei dem der Schaltungswählhebel (210) normalerweise zu der dem Sicherheitsventil (2110) zugeordneten Schaltung offen ist, während das Sicherheitsventil (2110) ein normalerweise geschlossenes, aber zur Steuerung offenes Absperrventil ist.

12. System gemäß einem der Ansprüche 7 bis 11, bei dem der Schaltungswählhebel (210) ein DreiwegeVentil mit geschlossenem Zentrum ist.

13. Herstellungsverfahren einer Antriebs-Unterstützungsschaltung eines Anhängers ausgehend von einer vorhandenen Gruppe, umfassend:
- eine Hydraulikpumpe (130), die auf einem Zugfahrzeug (10) eingebaut ist,
- einen Hydraulikschlauch (160), der mit dem Ausgang der Pumpe (130) verbunden ist
und
- einen Anschluss (170), der am Ausgang des Schlauchs (160) angeordnet und geeignet ist, um an einem komplementären Stecker (180) verbunden zu sein, der auf einem Anhänger (20) vorgesehen ist, um die Versorgung eines Zylinders (110) zu ermöglichen, der auf dem Anhänger, zum Beispiel für eine Anhängerladung, angeordnet ist
**gekennzeichnet durch** die Tatsache, dass es die Schritte umfasst, bestehend aus dem Anordnen auf dem Anhänger:
- einen Schaltungswählhebel (210), der zum selektiven Verbinden des genannten Steckers (180) entweder mit dem Zylinder (110) oder mit einer Versorgungsleitung (220) einer Antriebsunterstützungs-Schaltung geeignet ist, und
- eine Unterstützungsschaltungs-Rückleitung (250), die geeignet ist, um mit einem Tank (120) verbunden zu sein, der auf dem Zugfahrzeug angeordnet ist.

14. Verfahren gemäß Anspruch 13, das die Schritte für ein Anhängerladungs-Verfahren umfasst, bestehend aus:
- Deaktivieren der Unterstützung per Steuerung des Wählhebels,
- Antreiben der Pumpe (130) und Kontrollieren der Anhängerladung mit einem entsprechenden Befehl und bei einem Unterstützungsverfahren aus
- Auswählen des Unterstützungsmodus per Befehl des Wählhebels (210), dann
- Inbetriebsetzen der Pumpe (130).

15. Fahrzeug, das ein Hydrauliksystem gemäß einem der Ansprüche 1 bis 12 umfasst.

## Claims

1. A hydraulic system comprising:
- a hydraulic pump (130) fitted on a towing vehicle (10),
- a hydraulic pipe (160) connected to the outlet of the pump (130),
- a control valve (190) placed on the pipe, and
- a connector (170) placed at the outlet of the pipe (160) and adapted to be connected to a complementary socket (180) provided on a trailer (20) for supplying power to a jack (110) placed on the trailer, for example for dumping purposes,
**characterised in that** it comprises:
- a shuttle valve (210) adapted to selectively connect said socket (180) either to a jack (110) or to a supply duct (220) of a drive assistance circuit, and
- an assistance circuit return duct (250) adapted to be connected to a tank (120) placed on the towing vehicle.

2. The system according to claim 1, wherein the shuttle valve (210) is a three-way-two-position valve comprising an inlet (211) adapted to be connected to said socket (180) and two outlets (212, 213) adapted to be connected to the supply duct of the drive assistance circuit (220) and to the jack (110) respectively, the inlet (211) being connected to the first outlet (212) in a first position of the shuttle valve (210) and the inlet (211) being connected to the second outlet (213) in the second position of the shuttle valve (210).

3. The system according to one of claims 1 or 2, wherein the shuttle valve (210) is placed to rest in a position of active drive assistance circuit.

4. The system according to one of claims 1-3, wherein the return duct (250) opens into a plug of the tank (120).

5. The system according to one of claims 1-4, which comprises a 3-way-3-position control valve (190) interposed between the hydraulic pump (130) and hydraulic pipe (160) for alternately connecting the pump (130) outlet to the hydraulic pipe (160) or to a tank (120) or connecting the hydraulic pipe (160) to the tank (120).

6. The system according to one of claims 1-5, wherein the shuttle valve (210) is driven by a command diverted from its usual prime use, in particular a cab-located switch.

7. The system according to one of claims 1-6, which comprises safety means adapted to make sure that an oil flow rate generated by the pump (130) cannot actuate a wrong hydraulic component in case of deficiency and ensure that means for controlling the fluid stream or for cutting off the fluid stream are held in a desired position in order to avoid an unexpected supply of a wrong component, especially of a dumping command jack (110),
the safety means being especially adapted to either:
• close the supply line of the jack (110), for example by means of a safety valve (2110),
• force a rest position of the shuttle valve (210) different from the supply position of the jack (110), for example by means of a closed centre valve or bistable valve or normally assistance-directed valve,
• or detect a pressure variation by sensors (2120), which is representative of a signal loss, for example corresponding to the supply of the jack (110) during assistance, and cut-off the hydraulic supply.

8. The system according to claim 7, which comprises at least one position or pressure sensor (2120), especially a pressure sensor adapted to measure pressure at the supply line of the jack (110) and/or at the assistance circuit (100), adapted to switch a component of the system when detecting a deficiency, for example to isolate the pump (130), cut-off the supply of the pump (130) or interrupt the pump flow rate by driving a valve associated with the pump (130).

9. The system according to one of claims 7 or 8, wherein the shuttle valve (210) is a bistable valve.

10. The system according to one of claims 7-9, wherein a safety valve (2110) is interposed between an outlet (213) of the shuttle valve (210) and the inlet of the circuit associated therewith.

11. The system according to the preceding claim, wherein the shuttle valve (210) is normally open to the circuit associated with the safety valve (2110), whereas the safety valve (2110) is a normally closed, but open on command, cut-off valve.

12. The system according to one of claims 7-11, wherein the shuttle valve (210) is a closed centre 3-position valve.

13. A method for making a trailer drive assistance circuit from an existing assembly comprising:
- a hydraulic pump (130) fitted on a towing vehicle (10),
- a hydraulic pipe (160) connected to the outlet of the pump (130), and
- a connection (170) placed at the outlet of the pipe (160) and adapted to be connected to a complementary socket (180) provided on a trailer (20) for supplying power to a jack (110) placed on the trailer, for example for dumping purposes, **characterised in that** it comprises the steps of placing on the trailer:
- a shuttle valve (210) adapted to selectively connect said socket (180), either to a jack (110), or to a supply duct (220) of a drive assistance circuit,
and
- an assistance circuit return duct (250) adapted to be connected to a tank (120) placed on the towing vehicle.

14. The method according to claim 13, which comprises the steps, for a dumping procedure, of:
- deactivating the command assistance of the shuttle valve,
- driving the pump (130) and controlling dumping with a corresponding command, and
for an assistance procedure,
- selecting the command assistance mode of the shuttle valve (210), and then
- turning on the pump (130).

15. A vehicle which comprises a hydraulic system in accordance with one of claims 1-12.
